# EUROPEAN PATENT SPECIFICATION

(11) **EP 3 371 672 B1**
(45) Date of publication and mention of the grant of the patent: **26.05.2021**
(21) Application number: 16788757.9
(22) Date of filing: 27.10.2016
(51) Int. Cl.: G05D 7/06

(54) **ELECTROPNEUMATIC GAS MIXING VALVE AND PRESSURE CONTROLLER**
ELEKTROPNEUMATISCHES GASMISCHVENTIL UND DRUCKREGLER
SOUPAPE ÉLECTROPNEUMATIQUE DE MÉLANGE DE GAZ ET RÉGULATEUR DE PRESSION

(30) Priority: 03.11.2015 GB 201519415
(43) Date of publication of application: 12.09.2018
(73) Proprietor: Norgren Limited, Lichfield, Staffordshire WS13 8SY (GB)
(72) Inventor: GRUBB, Mark Richard, Lichfield Staffordshire WS13 8SY (GB); LAST, Ray, Lichfield Staffordshire WS13 8SY (GB)
(74) Representative: Range, Christopher William
(86) International application number: PCT/GB2016/053333
(87) International publication number: WO 2017/077271

(56) References cited:
- EP-A1- 2 667 277
- DE-B3-102006 055 779
- FR-A1- 2 713 105
- GB-A- 1 411 078
- GB-A- 1 497 894
- US-A- 5 299 568
- US-A1- 2012 000 559

## Description

### TECHNICAL FIELD

The embodiments described below relate to gas mixing valves and, more particularly, to electropneumatic gas mixing valves and pressure controllers.

### BACKGROUND

The presentation and taste of beer is correlated with the ratio of CO2 and N2 dissolved in the beer. The proper ratio of CO2 and N2 can vary among beer types. For example, the proper ratio for a pilsner may be different than a proper ratio for a stout. The proper ratio can also be correlated with environmental conditions, such as an ambient temperature. The ambient temperature may be the temperature surrounding a beer keg and/or dispenser (e.g., beer tap). The beer kegs have a space over the beer (headspace) that is filled with a mixed CO2/N2 gas at a mix ratio and pressure that is desirable if the ambient temperature is maintained at the specified temperature.

Many pubs maintain cellars that keep the kegs at the specified temperature to ensure that the beer is dispensed with the desired presentation and taste. However, the beer is often dispensed in uncontrolled environments such as hotels, restaurants, sports clubs, etc. As a result, the temperature of the dispensed beer can vary significantly, leading to inconsistent consumer experiences. Accordingly, there is a need to ensure that the ratio of dissolved CO2/N2 in the beer is at the proper ratio over a range of environmental conditions. EP 2667277 discloses a method of, and apparatus for, providing a gas mixture based on measurement of the average molecular weight of the mix.

### ASPECTS

The following examples/aspects/embodiments are not according to the invention and are present for illustration purposes only. The invention as such is set forth in the independent claims. According to an aspect of the present invention, an electropneumatic gas mixing valve and pressure controller (100) comprises at least one port (100a, 100b) configured to receive a first gas component, an additional port (100c) configured to receive a second gas component, a first gas mixer (120) in fluid communication with the at least one port (100a, 100b) and the additional port (100c). The first gas mixer (120) is configured to receive the first and second gas component, mix the first and second gas component into a mixture, measure a pressure of the mixture, and control a mass flow rate of at least one of the first and second gas component based on a pressure of the mixture for pressurizing beer, the first gas mixer is comprised of mixing manifold, at least one valve coupled to the mixing manifold, at least one flow sensor coupled to the mixing manifold and a pressure sensor coupled to the mixing manifold.

Preferably, the electropneumatic gas mixing valve and pressure controller (100) further comprises a second gas mixer (130) configured to receive the first and second gas component, mix the first and second gas component into a second mixture, measure a pressure of the second mixture, and control a mass flow rate of at least one of the first and second gas component based on a pressure of the second mixture for pressurizing beer.

Preferably, the first gas component is nitrogen and the second gas component is carbon dioxide.

Preferably, the second gas mixer (130) is comprised of mixing manifold (126, 136), at least one valve (122a, 132a, 122b, 132b) coupled to the mixing manifold (126, 136), at least one flow sensor (124a, 134a, 124b, 134b) coupled to the mixing manifold (126, 136), and a pressure sensor (128, 138) coupled to the mixing manifold (126, 136).

Preferably, the electropneumatic gas mixing valve and pressure controller (100) further comprises a nitrogen generator (150) fluidly coupled to the at least one port (100a, 100b) and configured to supply nitrogen to the at least one port (100a, 100b).

Preferably, the electropneumatic gas mixing valve and pressure controller (100) further comprises a compressor (140) configured to receive ambient air and provide compressed ambient air to the nitrogen generator (150).

Preferably, the electropneumatic gas mixing valve and pressure controller (100) further comprises a controller (110) communicatively coupled to at least one of the first gas mixer (120) and the second gas mixer (130) and configured to control the operation of at least one of the first gas mixer (120) and the second gas mixer (130).

Preferably, the electropneumatic gas mixing valve and pressure controller (100) is further configured to receive a temperature of the ambient environment and control the flow rate of the at least one of the first and second gas component based on the temperature for pressurizing the beer.

According to an aspect of the present invention, a method of controlling an electropneumatic gas mixing valve and pressure controller comprises receiving a first gas component with at least one port, receiving a second gas component with an additional port, mixing the first and second gas component into a mixture with a first gas mixer fluidly coupled to the at least one port and the additional port, measuring a pressure of the mixture, and controlling a mass flow rate of at least one of the first and second gas component based on a pressure of the mixture for pressurizing beer, sensing the mass flow rate of the at least one of the first and second gas component and controlling the mass flow rate of the at least one of the first and second gas component with the first gas mixer based on the sensed mass flow rate and pressure.

Preferably, the method further comprises receiving the first gas component and the second gas component with a second gas mixer, mixing the first and second gas component into a second mixture with the second gas mixer fluidly coupled to the at least one port and the additional port, measuring a pressure of the second mixture, and controlling a mass flow rate of at least one of the first and second gas component based on the pressure of the second mixture for pressurizing beer.

Preferably, the first gas component is nitrogen and the second gas component is carbon dioxide.

Preferably, the method further comprises sensing the flow rate of the at least one of the first and second gas component and controlling the flow rate of the at least one of the first and second gas component with the second gas mixer based on the sensed flow rate and pressure.

Preferably, the method further comprises generating nitrogen with a nitrogen generator and providing the generated nitrogen to the at least one port.

Preferably, the method further comprises receiving ambient air and providing compressed ambient air to the nitrogen generator.

Preferably, the method further comprises receiving a temperature of the ambient environment and controlling the mass flow rate of the at least one of the first and second gas component based on the temperature to control the mass flow rate of the mixture of the first and second gas component for pressurizing the beer.

### BRIEF DESCRIPTION OF THE DRAWINGS

The same reference number represents the same element on all drawings. It should be understood that the drawings are not necessarily to scale.
FIG. 1 shows a perspective view of a system 10 with an electropneumatic gas mixing valve and pressure controller 100 according to an embodiment.
FIGS. 2, 3, and 4 show plan views of the electropneumatic gas mixing valve and pressure controller 100.
FIGS. 5 and 6 respectively show fluid flow and communication block diagrams of the electropneumatic gas mixing valve and pressure controller 100.
FIG. 7 shows a block diagram view of a fluid flow and a communications block diagram of the electropneumatic gas mixing valve and pressure controller 500 according to an embodiment.
FIG. 8 shows a more detailed view of the first flow controller 520a described in the foregoing with reference to FIG. 7.
FIG. 9 shows a method 900 of controlling an electropneumatic gas mixing valve and pressure controller according to an embodiment.
FIG. 10 shows an example plot of the regulation characteristic of a pressure regulator.
FIG. 11 shows an example plot of the flow characteristic of a pressure regulator.

### DETAILED DESCRIPTION

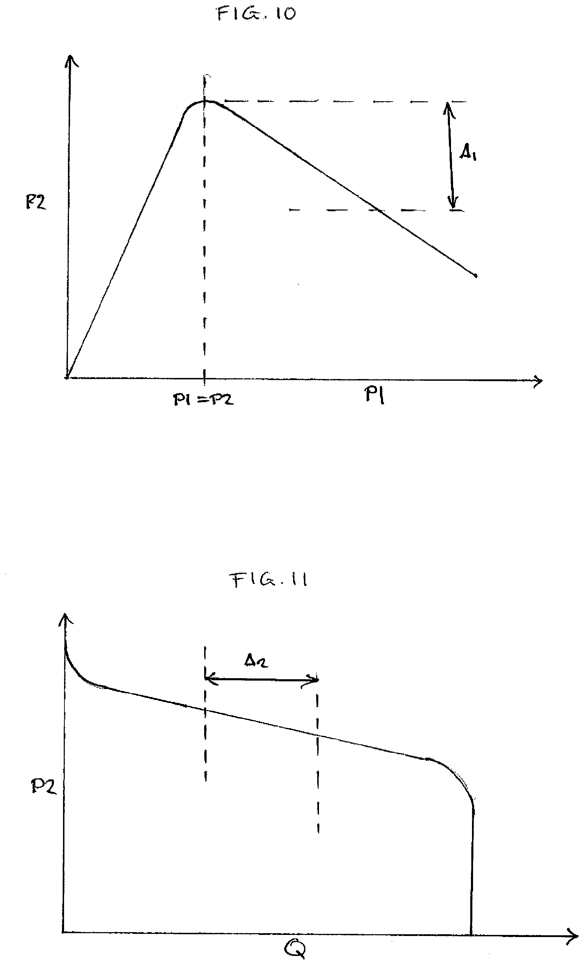

FIGS. 10 - 11 and the following description describe respectively the terms Regulation Characteristic and Flow Characteristic of an exemplary pressure regulator.
FIG. 10 shows a schematic plot illustrating the 'Regulation Characteristic' of a pressure regulator. The skilled person will recognise that the Regulation Characteristic is the extent to which a change in a primary pressure (PI) causes a secondary pressure (P2) to change. The Regulation Characteristic normally causes the secondary pressure P2 to increase as the primary pressure P1 decreases. This means that, for example, as the gas in a pressurised container or bottle is consumed, the secondary pressure P2 increases as the primary pressure or bottle pressure (PI) decreases. This increase in the secondary pressure P2, up-stream of an orifice, causes a subsequent increase in flow rate which in turn changes the mix ratio if the effect is not compensated by an adjustment on the other gas channel. In open loop gas mixing systems, mitigation of the effect of the Regulation Characteristic therefore requires two regulators, a primary regulator, normally positioned on an outlet of a gas bottle, and a secondary regulator immediately downstream of the primary regulator. The primary regulator acts as a buffer for the secondary regulator, shielding the secondary regulator from the gas bottle pressure. With closed loop control, the Regulation Characteristic does not have a significant effect on flow rate because flow rate is controlled by feedback from a flow sensor, not by pressure, so a secondary regulator is not required (it is replaced by a flow controller) and thus the accuracy of the mix is improved. This is illustrated in FIG. 10 by the pressure change Δ₁ (DELTA 1). A solution to minimising Δ₁ (DELTA 1) is to utilise a primary and secondary regulator.
FIG. 11 shows a schematic plot illustrating the 'Flow Characteristic' of a pressure regulator. The skilled person will recognise that the Flow Characteristic is the extent to which changes in flow through the regulator cause the secondary pressure (P2) to change. Δ₂ (DELTA 2) shows that as P2 decreases, the flow rate Q increases. In an open loop gas mixing system the Flow Characteristic can affect mix ratio accuracy. The Flow Characteristic effect is mitigated by configuring the gas mixing system such that when the regulators of the gas mixing system are open, their final flow rate is repeatable and flows for a sufficient length of time that the opening characteristic does not have a significant effect on mix ratio accuracy. This is achieved through the inclusion of a buffer tank and appropriate buffer tank pressure range in the gas mixing system. With closed loop control of a gas mixing system the Flow Characteristic does not have a significant effect on flow rate, so a buffer tank is not required. In open loop control of a gas mixing system a further pressure regulator on the output of the buffer tank is required to regulate the mixture pressure. In closed loop control of a gas mixing system this is not required as the gas mix can be dispensed from proportional valves at the required final pressure. To minimise the variation in pressure P2 over the flow range Δ₂ (DELTA 2) is to further restrict the operation of the pressure regulator to a smaller operational flow range.

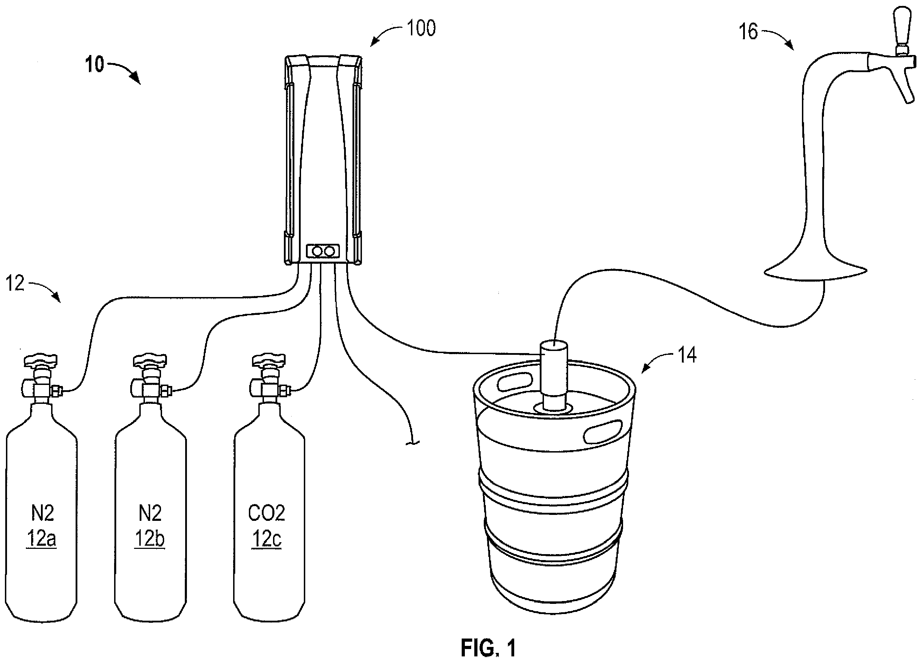

FIGS. 1 - 9 and the following description depict specific examples to teach those skilled in the art how to make and use the best mode of embodiments of an electropneumatic gas mixing valve and pressure controller. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the electropneumatic gas mixing valve and pressure controller. As a result, the embodiments described below are not limited to the specific examples described below, but only by the claims and their equivalents.

### Perspective view of system

**FIG. 1** shows a perspective view of a system 10 with an electropneumatic gas mixing valve and pressure controller 100 according to an embodiment. As shown in FIG. 1, the system 10 includes gas cylinders 12 fluidly coupled to the electropneumatic gas mixing valve and pressure controller 100. In the embodiment shown, the gas cylinders 12 is comprised of a duty nitrogen (N2) cylinder 12a, a reserve nitrogen (N2) cylinder 12b, and a carbon dioxide (CO2) cylinder 12c, although alternative configurations may be employed in alternative embodiments. The electropneumatic gas mixing valve and pressure controller 100 is also fluidly coupled to a keg 14 that includes beer. The electropneumatic gas mixing valve and pressure controller 100 provides a mixture of gas components from the gas cylinders12. The mixture is provided to the headspace in the keg 14 to pressurize the beer to prevent effervescence. The beer, which includes the dissolved gas mixture, is provided to a dispenser 16, which is commonly referred to as a tap.

As will be explained in more detail in the following, the electropneumatic gas mixing valve and pressure controller 100 controls a flow rate of at least one of the components of the gas mixture. Controlling flow rate of the at least one of the components of the gas mixture can ensure that a ratio in the gas mixture is desirable. The flow rate of the at least one of the components may be controlled based on the pressure of the gas mixture provided to the keg 14 and environmental conditions, such as a temperature of the environment surrounding the gas cylinders 12 and/or keg 14. This may ensure that the beer and gas blend provided by the dispenser 16 has an optimal taste given the environmental conditions in which the gas cylinders 12 and/or keg 14 are disposed.

### Plan views

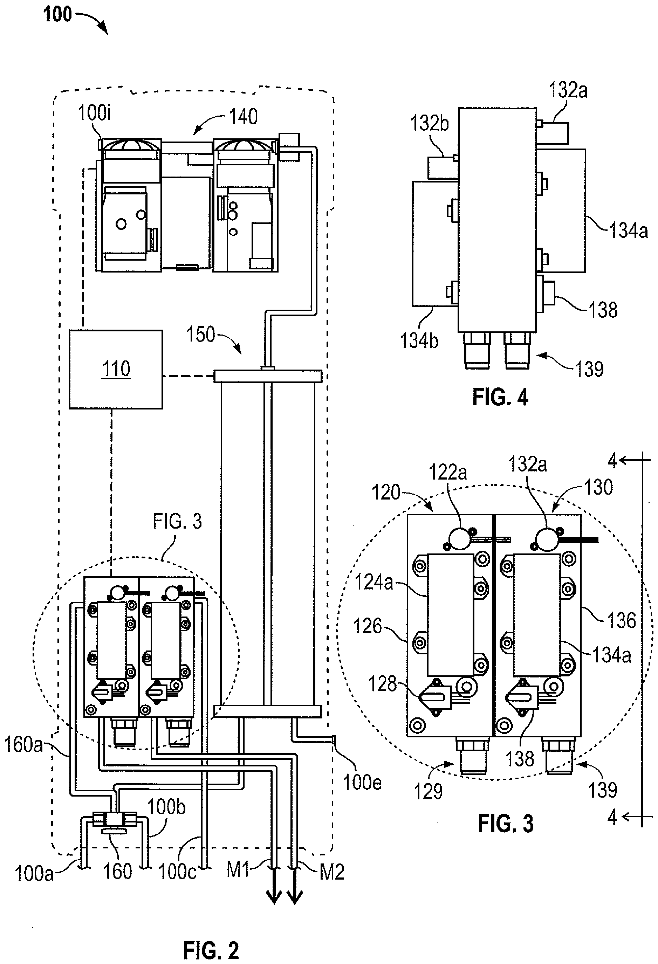

**FIGS. 2, 3, and 4** show plan views of the electropneumatic gas mixing valve and pressure controller 100. As shown in FIGS. 2 and 3, the electropneumatic gas mixing valve and pressure controller 100 includes a controller 110 communicatively coupled with a first gas mixer 120 and a second gas mixer 130. The controller 110 is also communicatively coupled with a compressor 140 and a nitrogen generator 150. The electropneumatic gas mixing valve and pressure controller 100 also includes a change-over valve 160 that is fluidly coupled to the duty N2 cylinder 12a via a first port 100a, the reserve N2 cylinder 12b via the second port 100b, and the CO2 cylinder 12c via the third port 100c. The change-over valve 160 is also fluidly coupled to the first and second gas mixers 120, 130 and the nitrogen generator 150, which is fluidly coupled to the compressor 140.

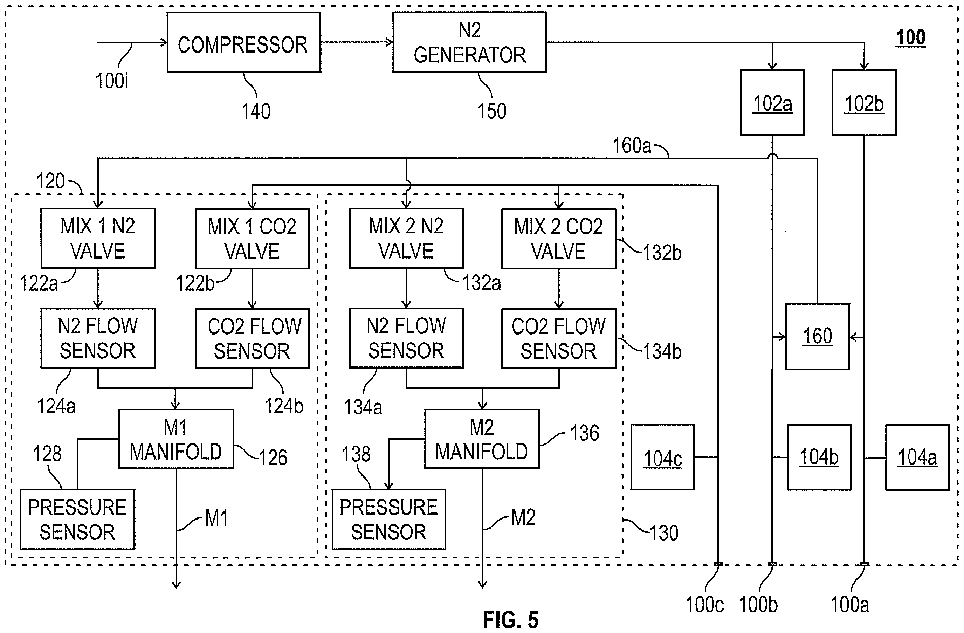

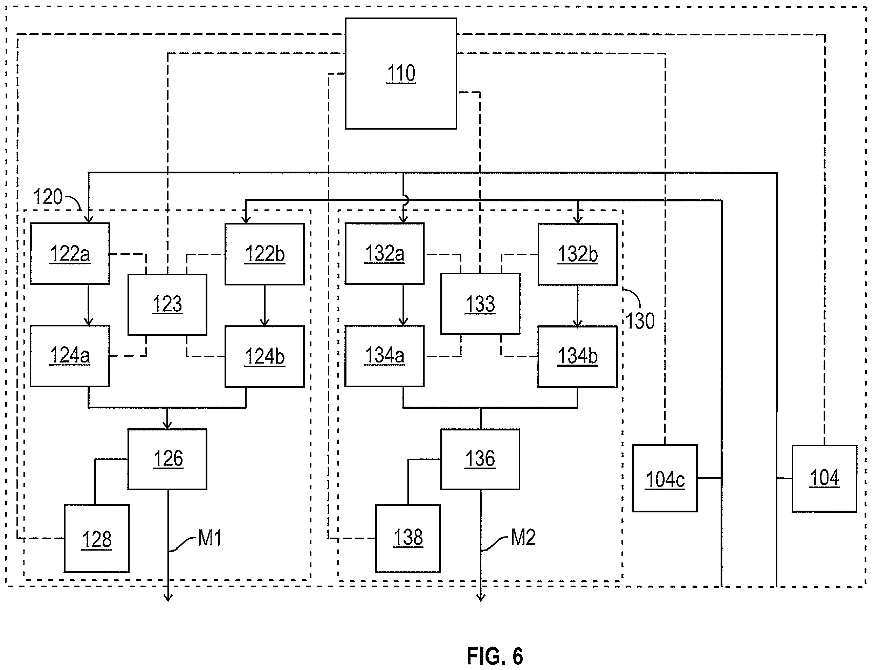

As shown in FIGS. 3 and 4, the first and second gas mixer 120, 130 include a first valve 122a, 132a and a second valve 122b, 132b. The first and second gas mixer 120, 130 also include a first flow sensor 124a, 134a and a second flow sensor 124b, 134b. The second valve 122b and second flow sensor 124b on the first gas mixer 120 are not shown in FIGS. 3 and 4 due to the view being obstructed by the second gas mixer 130. However, block representations of the second valve 122b and second flow sensor 124b are shown in FIGS. 5 and 6. The first and second gas mixer 120, 130 also include a mixing manifold 126, 136 for mixing gas components. Also as shown in FIGS. 3 and 4, the first and second gas mixer 120, 130 include a pressure sensor 128, 138, which is configured to sense the pressure of the mixture of the gas components, and relief valves 129, 139. In an embodiment, each of the relief valves 129, 139 is comprised of two valves for redundancy. As will be explained in more detail in the following, the first and second gas mixer 120, 130 can be configured to mix gas components to provide the gas mixture, such as a first and second gas mixture M1, M2 shown in FIG. 2.

### Fluid flow and communication block diagrams

**FIGS. 5** **and** **6** respectively show fluid flow and communication block diagrams of the electropneumatic gas mixing valve and pressure controller 100. As shown in FIGS. 5 and 6, the electropneumatic gas mixing valve and pressure controller 100 includes the controller 110, first and second gas mixer 120, 130, compressor 140, nitrogen generator 150, and change-over valve 160 described in the foregoing with reference to FIGS. 2-4. Also shown are the first and second gas mixer 120, 130 with the first valve 122a, 132a, second valve 122b, 132b, first flow sensor 124a, 134a, second flow sensor 124b, 134b, mixing manifold 126, 136, and pressure sensor 128, 138 described in the foregoing. The first and second gas mixture M1, M2 are provided by the first and second gas mixer 120, 130. In addition, check valves 102a, 102b are fluidly coupled to the nitrogen generator 150 and the change-over valve 160. The check valves 102a, 102b are configured to allow flow from the nitrogen generator 150 to the change-over valve 160 but prevent reverse flow from the change-over valve 160 to the nitrogen generator 150 and the gas cylinders 12a and 12b.

As shown in FIGS. 5 and 6, the electropneumatic gas mixing valve and pressure controller 100 also includes a first, second, and third pressure sensor 104a, 104b, 104c and flow controllers 123, 133. The first pressure sensor 104a is configured to sense the pressure of nitrogen provided by the duty cylinder 12a to the first port 100a. The second pressure sensor 104b is configured to sense the pressure of the nitrogen provided to the second port 100b by the reserve N2 cylinder 12b. The third pressure sensor 104c is configured to sense the pressure of the carbon dioxide provided by the CO2 cylinder 12c to the third port 100c.

Referring to FIG. 6, the flow controllers 123, 133 are communicatively coupled to the first valve 122a, 132a, second valve 122b, 132b, first flow sensor 124a, 134a, and second flow sensor 124b, 134b and controller 110. The check valves 102a, 102b and change-over valve 160 are not shown in FIG. 6 for clarity. The controller 110 is also communicatively coupled to the pressure sensor 104, which is a simplified representation of the first and second pressure sensor 104a, 104b shown in FIG. 5. Also as shown in FIG. 6, the controller 110 is communicatively coupled to the pressure sensor 128, 138 and the third pressure sensor 104c.

The controller 110 may be any controller suitable for controlling the operations of the electropneumatic gas mixing valve and pressure controller 100. For example, the controller 110 may comprise a microprocessor communicatively coupled to a memory and inputs and output ports. The processor may be any suitable processor such as an ARM, x386, etc., microprocessor configured to execute the methods described herein. The memory may be part of or external to the processor. For example, the processor could be in communication with a dynamic random access memory (DRAM), hard disk drive, flash drive, or the like that stores the methods described herein.

Although the controller 110 is shown as a single device, the controller 110 may be comprised of difference devices disposed in different locations. For example, some functions, such as flow rate and pressure control, may be performed by a processor in the mixers 120, 130. The controller 110 may also be configured to store various values such as flow rate and pressure set points. In the embodiment shown and other embodiments, the controller 110 can communicate with the gas mixers 120, 130, compressor 140, and N2 generator 150 to perform various operations such as controlling the flow of gas components through the gas mixers 120, 130 to provide the first and second mixtures M1, M2.

The gas mixers 120, 130 are arranged in a side-by-side configuration with the valve 122a, 132a, flow sensor 124a, 134a, mixing manifold 126, 136, and pressure sensors 128, 138. However, any suitable configuration of the gas mixers 120, 130 may be employed in alternative embodiments. For example, a different number of the valves 122a, 132a, flow sensors 124a, 134a, and pressure sensors 128, 138 may be employed in alternative embodiments.

In the embodiment shown, the first valves 122a, 132a, and second valves 122b, 132b are coupled to the mixing manifolds 126, 136. The first and second valves 122a, 132a, 122b, 132b are configured to control a flow rate of the first and second gas component flowing through the gas mixers 120, 130. The first and second valves 122a, 132a, 122b, 132b may be configured to receive a signal from the controller 110 that controls a relative position of a valve member in the first and second valves 122a, 132a, 122b, 132b. In the embodiment shown, the first and second valves 122a, 132a, 122b, 132b are proportional solenoid valves. However, in an alternative embodiment, the first and second valves 122a, 132a, 122b, 132b may be stepper motor driven needle valves. The stepper motor needle valves may be desirable because the valves can stay in a given position when power is not provided to the valves. Accordingly, the mix ratio may remain the same, assuming gas temperature and pressure remains constant, even though power is not being consumed.

The mixing manifolds 126, 136 include gas component ports and gas mixture outlets. The gas component ports are fluidly coupled to the first through third ports 100a-100c. The gas mixture outlets of the mixing manifolds 126, 136 provide the first and second gas mixtures M1, M2. The mixing manifolds 126, 136 are shown as two separate blocks of material that are coupled to each other. However, in alternative embodiments, the mixing manifolds 126, 136 may be a single integrated block of material. Different configurations of the components may be employed such as an additional valves, flow sensors, or the like.

The pressure sensors 128, 138 are configured to sense the pressure of the first and second gas mixtures M1, M2. The pressure sensors 128, 138 are communicatively coupled to the controller 110 and configured to provide a signal that is proportional to the pressure of the gas mixtures M1, M2. Accordingly, the controller 110 can control the flow rate of the gas components based on the pressure of the first and second gas mixtures M1, M2.

The compressor 140 is configured to receive ambient air at the port 100i and provide compressed air to the nitrogen generator 150. The controller 110 can control the compressor 140 to, for example, control the pressure, flow rate, or the like, of the air provided to the nitrogen generator 150. In the embodiment shown, the compressor 140 is an electrical pump that compresses air with a reciprocating piston. The controller 110 controls the compressor 140 by turning the compressor 140 on and off. The pressure and amount of air provided to the nitrogen generator 150 controls frequency and duration of the on/off cycling of the compressor 140. In other embodiments, any suitable compressor or means of supplying air to the nitrogen generator 150 may be employed.

The nitrogen generator 150 is a single column nitrogen generator. The nitrogen generator 150 is configured to generate nitrogen from a supply that includes nitrogen by filtering (e.g., adsorbing) non-nitrogen components from the supply. In the embodiment shown, activated alumina in the N2 generator 150 removes moisture from the air, which can prevent contamination of a carbon-molecular sieve. The carbon molecular sieve can remove other non-nitrogen components, such as oxygen, from the air. The resulting nitrogen is provided to N2 cylinder 12a and the reserve N2 cylinder 12b. This may help ensure that the duty N2 cylinder 12a and reserve N2 cylinder 12b have a relatively long time between change-overs. The nitrogen generator 150 is also coupled a purge exhaust 100e, which is used to exhaust purge gases during a purge cycle. In an alternative embodiment, a dual column nitrogen generator may be employed. In such an embodiment, during purging, the compressed air may pass through one of the columns while the other column is being vented.

The change-over valve 160 determines which of the duty N2 cylinder 12a and reserve N2 cylinder 12b is used to supply nitrogen N2. For example, the duty N2 cylinder 12a may be used to supply nitrogen N2 until the user decides to change out the duty N2 cylinder 12a. The user can turn the change-over valve 160 such that the nitrogen is supplied by the reserve N2 cylinder 12b. The duty N2 cylinder 12a can then be changed out while maintaining a continuous supply of nitrogen to the line 160a, which conveys the nitrogen N2 to the gas mixers 120, 130.

To generate the nitrogen, the compressor 140 receives air from an intake 100i and provides compressed air to the nitrogen generator 150. The nitrogen generator 150 oxygen and water vapor from the air and provides the remaining nitrogen to the change-over valve 160. Accordingly, the nitrogen generator 150 is fluidly coupled to the ports 100a, 100b. The nitrogen may be provided via check valves that prevent flow from the change-over valve 160 to the nitrogen generator 150 but allows flow from the nitrogen generator 150 to the change-over valve 160. The change-over valve 160 provides nitrogen to the first and second gas mixer 120, 130.

The nitrogen N2 and carbon dioxide CO2 are supplied to the gas mixers 120, 130 to provide the first and second mixture M1, M2 of gas components for pressurizing beer. As will be explained in more detail in the following, the nitrogen N2 and carbon dioxide CO2 are mixed to achieve a desired ratio and pressure, taking into consideration the ambient environment, and supplied to the keg 14.

### Partial view of a fluid flow and communication block diagram

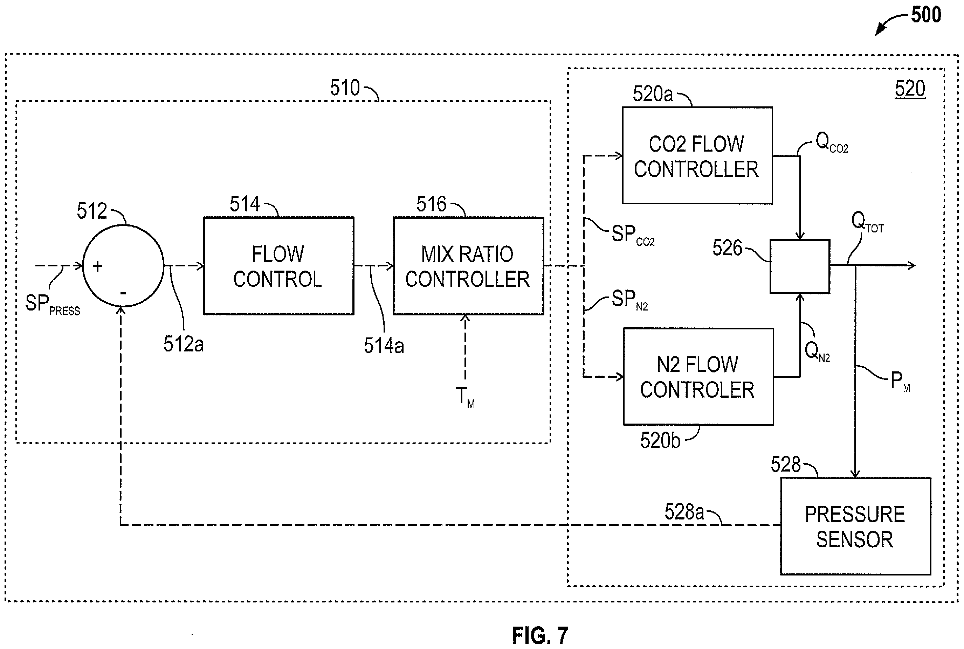

**FIG. 7** shows a partial view of a fluid flow and communication block diagram of the electropneumatic gas mixing valve and pressure controller 500 according to an embodiment. As shown in FIG. 7, the electropneumatic gas mixing valve and pressure controller 500 includes a controller 510 and gas mixer 520. The electropneumatic gas mixing valve and pressure controller 500 may be similar to the electropneumatic gas mixing valve and pressure controller 100 described in the foregoing. Accordingly, the controller 510 may be similar to the controller 110 and the gas mixer 520 may be one of the first and second gas mixers 120, 130 described in the foregoing. In the embodiment shown, the controller 510 includes a summation 512 communicatively coupled to a flow control 514, which is communicatively coupled to a mix ratio controller 516. The mix ratio controller 516 is communicatively coupled to the flow controllers 520a, 520b. The flow controllers 520a, 520b are fluidly coupled to a mixer 526, which mixes a first and second gas component and provides the mixture of the gas components. A pressure sensor 528 senses the pressure of the mixtures and provides a pressure measurement 528a to the summation 512.

As shown in FIG. 7, the first flow controller 520a is a CO2 flow controller and the second flow controller 520b is an N2 flow controller. Accordingly, in the embodiment shown, the first gas component is carbon dioxide CO2 and the second gas component is nitrogen N2. However, in alternative embodiments, any suitable flow controllers, configuration of flow controllers, and gas components may be employed. Additionally or alternatively, other configurations that can also control a fluid flow of the first and second gas components may also be employed.

The summation 512, flow control 514, and mix ratio controller 516 may be algorithms executed by a processor, such as a digital signal processor, although any suitable means may be employed in alternative embodiments. The summation 512 may be a digital summation that, for example, determines a difference between two values input into the summation 512. The values input into the summation 512 may be a sequence of digital values. The difference between the two values input into the summation 512 is an error 512a, which is provided to the flow control 514.

As shown, the flow control 514 may be a non-linear controller. More specifically, the flow control 514 may output a drive 514a that is the maximum total flow rate set point SP_{TOT} for a mixture, for example, a maximum flow rate when the error 512a is greater than a threshold. The flow control 514 is set to zero flow rate when the error 512a is zero. In an alternative embodiment, the flow control 514 may be a proportional-integral-derivative (PID) controller configured to output a drive based on the error 512a output by the summation 512. The drive may be proportional to constants (e.g., K_{P}, K_{I}, and K_{D}) that are multiplied with the error 512a and integration and/or derivative of the error 512a output by the summation 512. Generally speaking, the greater the error 512a output by the summation 512, the greater the drive output by the flow control 514.

The mix ratio controller 516 can use the drive to increase or decrease the flow rate of the gas components. The mix ratio controller 516 can increase or decrease the flow rate of the gas components by increasing or decreasing a flow rate set point. For example, if the drive output by the flow control 514 indicates that the mixed gas output flow rate is too low, then the flow control 514 may increase a flow rate set point until the error reaches zero. The flow rate set points may be provided for the gas component flow controllers. For example, the flow control 514 can provide a mixture flow rate set point SP_{TOT} to the mix ratio controller 516 and the mix ratio controller can provide gas component set points to the first flow controller 520a and second flow controller 520b in the gas mixer 520.

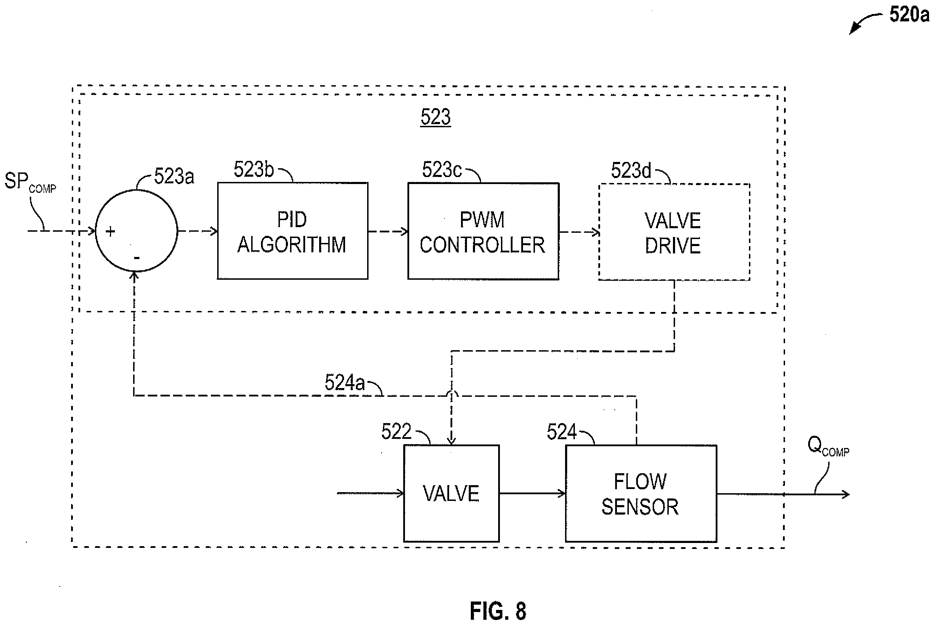

The first flow controller 520a and second flow controller 520b are flow controllers that respectively receive gas components, as will be described in more detail in the following with reference to FIG. 8. As shown in FIG. 7, the gas components are CO2 and N2, although any suitable gas components employed in beer dispensing may be employed in alternative embodiments. In the embodiment shown, the first flow controller 520a can receive the CO2 flow rate set point SP_{CO2} and the second flow controller 520b can receive the N2 flow rate set point SP_{N2}. The flow can ensure that the pressure of the gas component mixtures is at a desired pressure.

The ratio of the gas components may also be controlled. The mix ratio controller 516 also receives the temperature measurement T_{M}, which may indicate a change in the ambient temperature. The mix ratio controller 516 may determine that the ratio of the gas components is incorrect for the temperature measurement T_{M}. Accordingly, the mix ratio controller 516 may increase the flow rate of one of the gas components and decrease the flow rate of another gas component until a desirable ratio is obtained.

The flow controllers 520a, 520b can control a flow of the carbon dioxide CO2 and nitrogen N2 to a mixer 526. The mixer 526 can receive the gas components and mix the gas components. The mixture flow rate Q_{TOT} is provided at a mixture gas pressure P_{M}. The mixture gas pressure P_{M} is measured by the pressure sensor 528, which provides a pressure measurement 528a to the summation 512. As was explained in the foregoing, the flow control 514 and mix ratio controller 516 determine gas component flow rates, which are controlled by the first flow controller 520a and second flow controller 520b.

### Detailed view of a flow controller

**FIG. 8** shows a more detailed view of the first flow controller 520a described in the foregoing with reference to FIG. 7. As shown in FIG. 8, the first flow controller 520a includes a flow control processor 523. The flow control processor 523 includes a summation 523a communicatively coupled to a PID algorithm 523b. The PID algorithm 523b is communicatively coupled to a PWM controller 523c. The flow control processor 523 may also optionally include a valve drive 523d, depending on the type of valve 522 and/or valve signal employed. For example, the valve drive 523d may not be employed in embodiments where the valve 522 is configured to control the flow rate of the gas component flowing through the valve 522 by opening and closing according to a PWM signal provided by the PWM controller 523c. In the embodiment shown, the gas component is provided via the valve 522 to the flow sensor 524, which senses the flow rate of the gas component. The flow sensor provides a flow rate signal to the summation 523a. Accordingly, the flow rate Q_{COMP} may be at the flow rate setpoint SP_{COMP}.

Although FIG. 8 is an exemplary embodiment of the first flow controller 520a, other flow controller configurations may be employed. Additionally or alternatively, the configuration shown in FIG. 8 may be employed in the second flow controller 520b. As will be described in more detail in the following the first and second flow controllers 520a, 520b may be employed to control a pressure of the mixture of the gas components.

### Method

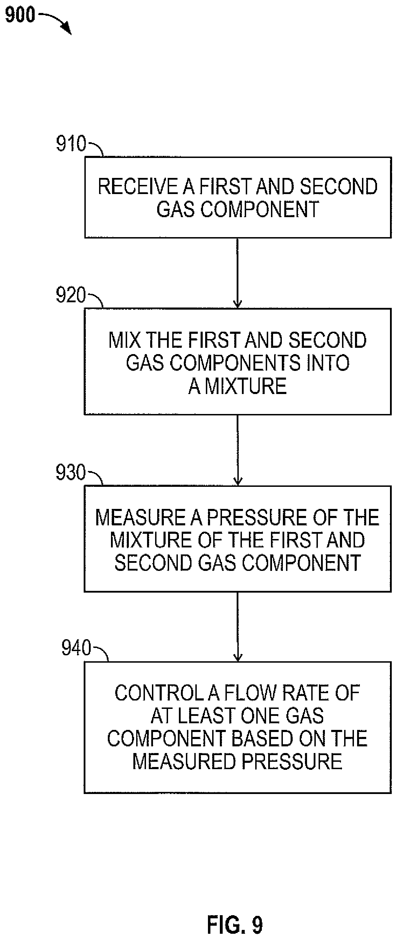

**FIG. 9** shows a method 900 of controlling an electropneumatic gas mixing valve and pressure controller according to an embodiment. The method 900 may be performed by the electropneumatic gas mixing valve and pressure controller 100, 500 described in the foregoing, although any suitable electropneumatic gas mixing valve and pressure controller may be employed in alternative embodiments. As shown in FIG. 9, the method 900 includes a step 910 of receiving a first and second gas component. The first and second gas component may respectively be nitrogen N2 and carbon dioxide CO2. The first and second gas component may respectively be provided via the first and third port 100a and 100c described in the foregoing.

In step 920, the method 900 mixes the first and second gas components into a mixture. The first and second gas components may be mixed in a mixer, such as the gas mixers 120, 130 described in the foregoing. The mixer may be fluidly coupled to the first and third ports 100a, 100c. The mixer may alternatively be fluidly coupled to the second and third port 100b, 100c.

In step 930, the method 900 measures a pressure of the mixture. The pressure may be measured by the pressure sensors 128, 138, 528 described in the foregoing, although any suitable pressure sensor configured to measure the pressure of the mixture may be employed. In the embodiments described in the foregoing, the pressure is measured at the mixers 120, 130, 520. However, in alternative embodiments, the pressure may be measured at any point prior to pressurizing the beer. The measured pressure P_{M} may be provided to the controller 110, 510.

In step 940, a flow rate of at least one of the gas components is controlled based on the measured pressure. In an embodiment, the controllers 110, 510 can adjust a flow rate set point SP_{COMP} to increase or decrease the flow rate of the gas component. The adjustment may take into consideration the ratio of the gas components. The ratio may be a ratio of a mass flow rate of the first gas component and the second gas component. For example, if the pressure is lower than a desired pressure, but the ratio of the gas components is at the desired ratio, then the flow rate of both of the gas components may be increased such that the pressure increases, but the ratio remains the same, as the following will explain in more detail.

In operation, gas components are provided by the gas cylinders 12 fluidly coupled to the electropneumatic gas mixing valve and pressure controller 100, 500. In the embodiment shown, the gas components are nitrogen N2 and carbon dioxide CO2. The gas components are provided to the first and second gas mixers 120, 130, 520. The first and second gas mixers 120, 130, 520 are controlled by the controller 110, 510 to mix the gas components to provide a first and second gas mixture M1 and M2. More specifically, the flow rates of the gas components are controlled by the gas mixer 120, 130, 520 to control the pressure P_{M} and ratio of the gas mixture M1, M2.

In an embodiment, the mixture pressure P_{M} of the gas mixture M1, M2 is sensed by the pressure sensor 128, 138, 528. The controller 110, 510 utilizes the sensed pressure to control the flow rate of the gas components. More specifically, if the mixture pressure P_{M} of the gas mixture M1, M2 is not at a pressure setpoint SP_{PRESS}, then the flow rate of one or more of the gas components may be adjusted to reach the pressure setpoint SP_{PRESS}. For example, if the mixture pressure P_{M} is too low, then the controller 110, 510 can increase the flow rate of one or more gas components to increase the gas mixture pressure P_{M}.

The flow rates of the gas components can also be adjusted to ensure that the ratio is proper for the environmental conditions. For example, the temperature measurement T_{M} may be compared to a temperature that is stored in the controller 110, 510. The stored temperature may be correlated with a proper ratio for a given beer type. The controller 110, 510 can adjust the flow rate of one or more components to ensure that the ratio of the gas components in the gas mixture M1, M2 is proper for the measured temperature and beer type.

The gas mixture M1, M2 is provided to the keg 14 for pressurizing beer. For example, a gas mixture comprised of nitrogen N2 and carbon dioxide CO2 may be provided to the keg 14, which may have a stout. The gas mixture M1, M2 of nitrogen N2 and carbon dioxide CO2 is blended with the stout. When the tap 16 is actuated, the blended beer/gas mixture M1, M2 is dispensed into a mug, cup, glass, or the like. This causes the volume of beer in the keg to decrease and, therefore, the volume of the headspace increases, resulting in a decrease in the pressure P_{M}. This causes an increase in error between the S_{PPRESS} and P_{M}, which creates demand for flow. This increases the flow rate of the gas components mixture Q_{TOT}. The flow rates of the gas components N2, CO2 can be adjusted such that the pressure P_{M} is desirable (e.g., at the pressure set point SP_{PRESS}) even though the flow rate of the gas components mixture Q_{TOT} increases.

The embodiments described above provide an electropneumatic gas mixing valve and pressure controller 100, 500. As explain above, the electropneumatic gas mixing valve and pressure controller 100, 500 adjusts the flow rate of gas components to control the pressure and ratio of the mixed gas components. The flow rate of the gas components may be individually controlled based on an ambient temperature and the pressure. Accordingly, a ratio of the gas components may be proper for the type of beer and the environmental conditions.

As a result, the electropneumatic gas mixing valve and pressure controller 100, 500 can be employed in a variety of uncontrolled environmental conditions. The electropneumatic gas mixing valve and pressure controller 100, 500 can control the flow rate of the gas components automatically without manual adjustment by the user. The mix ratios and pressure of the gas components can be adjusted for a given keg over time as the environmental conditions changes. Accordingly, the consumer will have a more consistent experience for a brand of beer even when the consumer consumes the brand of beer in a variety of locations with uncontrolled environmental conditions.

## Claims

1. An electropneumatic gas mixing valve and pressure controller (100), the controller (100) comprising:
at least one port (100a, 100b) configured to receive a first gas component;
an additional port (100c) configured to receive a second gas component;
a first gas mixer (120) in fluid communication with the at least one port (100a, 100b) and the additional port (100c), the first gas mixer (120) configured to:
receive the first and second gas component;
mix the first and second gas component into a mixture;
measure a pressure of the mixture; and
control a mass flow rate of at least one of the first and second gas component based on the pressure of the mixture for pressurizing beer, wherein the first gas mixer (120) is comprised of:
mixing manifold (126);
at least one valve (122a, 122b) coupled to the mixing manifold (126);
at least one flow sensor (124a; 124b); coupled to the mixing manifold (126); and
a pressure sensor (128) coupled to the mixing manifold (126).

2. The electropneumatic gas mixing valve and pressure controller (100) of claim 1, further comprising a second gas mixer (130) configured to:
receive the first and second gas component;
mix the first and second gas component into a second mixture;
measure a pressure of the second mixture; and
control a mass flow rate of at least one of the first and second gas component based on the pressure of the second mixture for pressurizing beer.

3. The electropneumatic gas mixing valve and pressure controller (100) of claim 1 or claim 2, wherein the first gas component is nitrogen and the second gas component is carbon dioxide.

4. The electropneumatic gas mixing valve and pressure controller (100) of claims 2 to 3, wherein the second gas mixer (130) is comprised of:
mixing manifold (136);
at least one valve (132a, 132b) coupled to the mixing manifold (136);
at least one flow sensor (134a, 134b) coupled to the mixing manifold (136); and
a pressure sensor (138) coupled to the mixing manifold (136).

5. The electropneumatic gas mixing valve and pressure controller (100) of one of any of the foregoing claims, further comprising a nitrogen generator (150) fluidly coupled to the at least one port (100a, 100b) and configured to supply nitrogen to the at least one port (100a, 100b).

6. The electropneumatic gas mixing valve and pressure controller (100) of one of any of the foregoing claims, further comprising a compressor (140) configured to receive ambient air and provide compressed ambient air to the nitrogen generator (150).

7. The electropneumatic gas mixing valve and pressure controller (100) of one of any of the foregoing claims, further comprising a controller (110) communicatively coupled to at least one of the first gas mixer (120) and the second gas mixer (130) and configured to control the operation of at least one of the first gas mixer (120) and the second gas mixer (130).

8. The electropneumatic gas mixing valve and pressure controller (100) of one of any of the foregoing claims, further configured to receive a temperature of the ambient environment and control the flow rate of the at least one of the first and second gas component based on the temperature for pressurizing the beer.

9. A method of controlling an electropneumatic gas mixing valve and pressure controller, the method comprising:
receiving a first gas component with at least one port;
receiving a second gas component with an additional port;
mixing the first and second gas component into a mixture with a first gas mixer fluidly coupled to the at least one port and the additional port;
measuring a pressure of the mixture; and
controlling a mass flow rate of at least one of the first and second gas component based on the pressure of the mixture for pressurizing beer, sensing the mass flow rate of the at least one of the first and second gas component and controlling the mass flow rate of the at least one of the first and second gas component with the first gas mixer based on the sensed mass flow rate and pressure.

10. The method of claim 9, further comprising:
receiving the first gas component and the second gas component with a second gas mixer;
mixing the first and second gas component into a second mixture with the second gas mixer fluidly coupled to the at least one port and the additional port;
measure a pressure of the second mixture; and
controlling a mass flow rate of at least one of the first and second gas component based on the pressure of the second mixture for pressurizing beer.

11. The method of claim 10 or claim 11, wherein the first gas component is nitrogen and the second gas component is carbon dioxide.

12. The method of claims 10 to 11, further comprising sensing the mass flow rate of the at least one of the first and second gas component and controlling the mass flow rate of the at least one of the first and second gas component with the second gas mixer based on the sensed mass flow rate and pressure.

13. The method of one of any of the foregoing claims, comprising generating nitrogen with a nitrogen generator and providing the generated nitrogen to the at least one port.

14. The method of claim 13, further comprising receiving ambient air and providing compressed ambient air to the nitrogen generator.

15. The method of one of any of the foregoing claims, further comprising receiving a temperature of the ambient environment and controlling the mass flow rate of the at least one of the first and second gas component based on the temperature to control the mass flow rate of the mixture of the first and second gas component for pressurizing the beer.

## Patentansprüche

1. Elektropneumatisches Gasmischventil und Druckregler (100), wobei der Regler (100) aufweist:
zumindest einen Anschluss (100a, 100b), der eingerichtet ist, einen erste Gaskomponente aufzunehmen;
einen zusätzlichen Anschluss (100c), der eingerichtet ist, eine zweite Gaskomponente aufzunehmen;
eine erste Gasmischeinrichtung (120) in fluidischer Kommunikation mit dem zumindest einen Anschluss (100a, 100b) und dem zusätzlichen Anschluss (100c), wobei die erste Gasmischeinrichtung (120) eingerichtet ist, um:
die erste und die zweite Gaskomponente aufzunehmen;
die erste und die zweite Gaskomponente zu einem Gemisch zu vermischen;
einen Druck des Gemischs zu messen; und
einen Massenstrom der ersten und/oder zweiten Gaskomponente basierend auf dem Druck des Gemischs zur Druckbeaufschlagung von Bier zu steuern; wobei die erste Gasmischeinrichtung (120) umfasst:
einen Mischverteiler (126);
zumindest ein Ventil (122a, 122b), das an den Mischverteiler (126) gekoppelt ist;
zumindest einen Durchflusssensor (124a; 124b), der an den Mischverteiler (126) gekoppelt ist; und
einen Drucksensor (128), der an den Mischverteiler (126) gekoppelt ist.

2. Elektropneumatisches Gasmischventil und Druckregler (100) nach Anspruch 1, ferner aufweisend eine zweite Gasmischeinrichtung (130), die eingerichtet ist, um:
die erste und zweite Gaskomponente aufzunehmen;
die erste und zweite Gaskomponente zu einem zweiten Gemisch zu vermischen;
einen Druck des zweiten Gemischs zu messen; und
einen Massenstrom der ersten und/oder zweiten Gaskomponente basierend auf dem Druck des zweiten Gemischs zur Druckbeaufschlagung von Bier zu messen.

3. Elektropneumatisches Gasmischventil und Druckreger (100) nach Anspruch 1 oder Anspruch 2, wobei die erste Gaskomponente Stickstoff ist und die zweite Gaskomponente Kohlendioxid ist.

4. Elektropneumatisches Gasmischventil und Druckregler (100) nach Anspruch 2 bis 3, wobei die zweite Gasmischeinrichtung (130) umfasst:
einen Mischverteiler (136);
zumindest ein Ventil (132a, 132b), das an den Mischverteiler (136) gekoppelt ist;
zumindest einen Durchflusssensor (134a, 134b), der an den Mischverteiler (136) gekoppelt ist; und
einen Drucksensor (138), der an den Mischverteiler (136) gekoppelt ist.

5. Elektropneumatisches Gasmischventil und Druckregler (100) nach einem der vorstehenden Ansprüche, ferner aufweisend einen Stickstoffgenerator (150), der fluidisch an den zumindest einen Anschluss (100a, 100b) gekoppelt ist und eingerichtet ist, Stickstoff an den zumindest einen Anschluss (100a, 100b) zuzuführen.

6. Elektropneumatisches Gasmischventil und Druckregler (100) nach einem der vorstehenden Ansprüche, ferner aufweisend einen Verdichter (140), der eingerichtet ist, Umgebungsluft aufzunehmen und dem Stickstoffgenerator (150) verdichtete Umgebungsluft bereitzustellen.

7. Elektropneumatisches Gasmischventil und Druckregler (100) nach einem der vorstehenden Ansprüche, ferner aufweisend einen Regler (100), der kommunikativ an die erste Gasmischeinrichtung (120) und/oder die zweite Gasmischeinrichtung (130) gekoppelt ist und eingerichtet ist, den Betrieb der ersten Gasmischeinrichtung (120) und/oder der zweiten Gasmischeinrichtung (130) zu steuern.

8. Elektropneumatisches Gasmischventil und Druckregler (100) nach einem der vorstehenden Ansprüche, der ferner zum Empfangen einer Temperatur der Umgebung und zum Steuern des Durchflusses der ersten und/oder zweiten Gaskomponente basierend auf der Temperatur zur Druckbeaufschlagung des Biers eingerichtet ist.

9. Verfahren zur Steuerung eines elektropneumatischen Gasmischventils und Druckreglers, wobei das Verfahren umfasst:
Aufnehmen einer ersten Gaskomponente mit zumindest einem Anschluss;
Aufnehmen einer zweiten Gaskomponente mit einem zusätzlichen Anschluss;
Mischen der ersten und zweiten Gaskomponente zu einem Gemisch, mit einer ersten Gasmischeinrichtung, die fluidisch an den zumindest einen Anschluss und den zusätzlichen Anschluss gekoppelt ist;
Messen eines Drucks des Gemischs; und
Steuern eines Massenstroms der ersten und/oder zweiten Gaskomponente basierend auf dem Druck des Gemischs zur Druckbeaufschlagung von Bier, Erfassen des Massenstroms der ersten und/oder zweiten Gaskomponente und Steuern des Massenstroms der ersten und/oder zweiten Gaskomponente mit der ersten Gasmischeinrichtung basierend auf dem erfassten Massenstrom und dem Druck.

10. Verfahren nach Anspruch 9, ferner umfassend:
Aufnehmen der ersten Gaskomponente und der zweiten Gaskomponente mit einer zweiten Gasmischeinrichtung;
Vermischen der ersten und der zweiten Gaskomponente zu einem zweiten Gemisch, wobei die zweite Gasmischeinrichtung fluidisch an den zumindest einen Anschluss und den zusätzlichen Anschluss gekoppelt ist;
Messen eines Drucks des zweiten Gemischs; und
Steuern eines Massenstroms des ersten und/oder zweiten Gasbestandteils basierend auf dem Druck des zweiten Gemischs zur Druckbeaufschlagung von Bier.

11. Verfahren nach Anspruch 10 oder Anspruch 11, wobei die erste Gaskomponente Stickstoff ist und die zweite Gaskomponente Kohlendioxid ist.

12. Verfahren nach Anspruch 10 bis 11, ferner umfassend ein Erfassen des Massenstroms der ersten und/oder zweiten Gaskomponente und Steuern des Massenstroms der ersten und/oder zweiten Gaskomponente mit der zweiten Gasmischeinrichtung basierend auf dem erfassten Massenstrom und dem Druck.

13. Verfahren nach einem der vorstehenden Ansprüche, ferner umfassend das Erzeugen von Stickstoff mit einem Stickstoffgenerator und das Bereitstellen des erzeugten Stickstoffs an dem zumindest einen Anschluss.

14. Verfahren nach Anspruch 13, ferner umfassend die Aufnahme von Umgebungsluft und das Bereitstellen von druckbeaufschlagter Umgebungsluft an den Stickstoffgenerator.

15. Verfahren nach einem der vorstehenden Ansprüche, ferner umfassend das Empfangen einer Temperatur der Umgebung und Steuern des Massenstroms der ersten und/oder zweiten Gaskomponente basierend auf der Temperatur, um den Massenstrom des Gemischs aus der ersten und zweiten Gaskomponente zur Druckbeaufschlagung von Bier zu steuern.

## Revendications

1. Vanne de mélange de gaz et régulateur de pression électropneumatiques (100), le régulateur (100) comprenant :
au moins un orifice (100a, 100b) configuré pour recevoir un premier composant gazeux ;
un orifice supplémentaire (100c) configuré pour recevoir un deuxième composant gazeux ;
un premier mélangeur de gaz (120) en communication fluidique avec l'au moins un orifice (100a, 100b) et l'orifice supplémentaire (100c), le premier mélangeur de gaz (120) étant configuré pour :
recevoir le premier et le deuxième composant gazeux ;
mélanger le premier et le deuxième composant gazeux en un mélange ;
mesurer une pression du mélange ; et
contrôler un débit massique d'au moins l'un des premier et deuxième composants gazeux sur la base de la pression du mélange pour pressuriser de la bière,
dans lequel le premier mélangeur de gaz (120) comprend :
un collecteur mélangeur (126) ;
au moins une vanne (122a, 122b) couplée au collecteur mélangeur (126) ;
au moins un capteur de débit (124a ; 124b) couplé au collecteur mélangeur (126) ; et
un capteur de pression (128) couplé au collecteur mélangeur (126).

2. Vanne de mélange de gaz et régulateur de pression électropneumatiques (100) selon la revendication 1, comprenant en outre un deuxième mélangeur de gaz (130) configuré pour :
recevoir le premier et le deuxième composant gazeux ;
mélanger le premier et le deuxième composant gazeux en un deuxième mélange ;
mesurer une pression du deuxième mélange ; et
contrôler un débit massique d'au moins l'un des premier et deuxième composants gazeux sur la base de la pression du deuxième mélange pour pressuriser la bière.

3. Vanne de mélange de gaz et régulateur de pression électropneumatiques (100) selon la revendication 1 ou la revendication 2, dans lequel le premier composant gazeux est de l'azote et le deuxième composant gazeux est du dioxyde de carbone.

4. Vanne de mélange de gaz et régulateur de pression électropneumatiques (100) selon les revendications 2 à 3, dans lequel le deuxième mélangeur de gaz (130) comprend :
un collecteur mélangeur (136) ;
au moins une vanne (132a, 132b) couplée au collecteur mélangeur (136) ;
au moins un capteur de débit (134a, 134b) couplé au collecteur mélangeur (136) ; et
un capteur de pression (138) couplé au collecteur mélangeur (136).

5. Vanne de mélange de gaz et régulateur de pression électropneumatiques (100) de l'une quelconque des revendications précédentes, comprenant en outre un générateur d'azote (150) couplé en communication de fluide à l'au moins un orifice (100a, 100b) et configuré pour fournir de l'azote à l'au moins un orifice (100a, 100b).

6. Vanne de mélange de gaz et régulateur de pression électropneumatiques (100) de l'une quelconque des revendications précédentes, comprenant en outre un compresseur (140) configuré pour recevoir de l'air ambiant et fournir de l'air ambiant comprimé au générateur d'azote (150).

7. Vanne de mélange de gaz et régulateur de pression électropneumatiques (100) selon l'une quelconque des revendications précédentes, comprenant en outre un régulateur (110) couplé de manière communicative à au moins l'un parmi le premier mélangeur de gaz (120) et le deuxième mélangeur de gaz (130) et configuré pour commander le fonctionnement d'au moins l'un parmi le premier mélangeur de gaz (120) et le deuxième mélangeur de gaz (130).

8. Vanne de mélange de gaz et régulateur de pression électropneumatiques (100) de l'une quelconque des revendications précédentes, configurée en outre pour recevoir une température de l'environnement ambiant et contrôler le débit du au moins un parmi le premier et le deuxième composant gazeux sur la base de la température de mise sous pression de la bière.

9. Procédé de commande d'une vanne de mélange de gaz et d'un régulateur de pression électropneumatiques, le procédé comprenant les étapes consistant à :
recevoir un premier composant gazeux au moyen d'au moins un orifice ;
recevoir un deuxième composant gazeux au moyen d'un orifice supplémentaire;
mélanger le premier et le deuxième composant gazeux en un mélange avec un premier mélangeur de gaz couplé de manière fluidique à l'au moins un orifice et l'orifice supplémentaire ;
mesurer une pression du mélange ; et
commander un débit massique d'au moins l'un des premier et deuxième composants gazeux sur la base de la pression du mélange pour pressuriser la bière, détecter le débit massique de l'au moins un parmi le premier et le deuxième composant gazeux et contrôler le débit massique du au moins un des premier et deuxième composants gazeux avec le premier mélangeur de gaz basé sur le débit massique et la pression détectés.

10. Procédé selon la revendication 9, comprenant en outre les étapes consistant à :
recevoir le premier composant gazeux et le deuxième composant gazeux avec un deuxième mélangeur de gaz ;
mélanger le premier et le deuxième composant gazeux en un deuxième mélange avec le deuxième mélangeur de gaz couplé en communication de fluide à l'au moins un orifice et à l'orifice supplémentaire ;
mesurer une pression du deuxième mélange ; et
commander un débit massique d'au moins l'un des premier et deuxième composants gazeux sur la base de la pression du deuxième mélange pour pressuriser la bière.

11. Procédé selon la revendication 10 ou la revendication 11, dans lequel le premier composant gazeux est l'azote et le deuxième composant gazeux est le dioxyde de carbone.

12. Procédé selon les revendications 10 à 11, comprenant en outre la détection du débit massique du au moins un des premier et deuxième composants gazeux et le contrôle du débit massique du au moins un parmi le premier et le deuxième composant gazeux avec le deuxième mélangeur de gaz basé sur le débit massique et la pression détectés.

13. Procédé selon l'une quelconque des revendications précédentes, comprenant la génération d'azote avec un générateur d'azote et la fourniture de l'azote généré à l'au moins un orifice.

14. Procédé selon la revendication 13, comprenant en outre la réception de l'air ambiant et la fourniture d'air ambiant comprimé au générateur d'azote.

15. Procédé selon l'une quelconque des revendications précédentes, comprenant en outre la réception d'une température de l'environnement ambiant et la commande du débit massique de l'au moins un des premier et deuxième composants gazeux sur la base de la température pour contrôler le débit massique du mélange du premier et deuxième composants gazeux pour pressuriser la bière.
